## Europäisches Patentamt

## European Patent Office

## Office européen des brevets

(19)

(11) Numéro de publication: **0 077 696
B1**

(12) **FASCICULE DE BREVET EUROPEEN**

(45) Date de publication du fascicule du brevet:
04.12.85

(51) Int. Cl.⁴: **B 62 D 5/04**

(21) Numéro de dépôt: 82401610.9

(22) Date de dépôt: 31.08.82

(54) Dispositif d'assistance de direction pour véhicule automobile.

(30) Priorité: 19.10.81 FR 8119610

(43) Date de publication de la demande:
27.04.83 Bulletin 83/17

(45) Mention de la délivrance du brevet:
04.12.85 Bulletin 85/49

(84) Etats contractants désignés:
DE GB IT SE

(56) Documents cités:
FR - A - 1 595 813
FR - A - 2 251 189
FR - A - 2 442 476

(73) Titulaire: ACIERS ET OUTILLAGE PEUGEOT Société
dite:, F-25400 Audincourt (Doubs) (FR)

(72) Inventeur: Bertot, Maurice Marcel, 69bis rue de Belfort,
F-25200 Montbeliard (FR)

(74) Mandataire: Bressand, Georges et al, c/o CABINET
LAVOIX 2 Place d'Estienne d'Orves, F-75441 Paris
Cedex 09 (FR)

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit
être formée par écrit et motivée. Elle n'est réputée formée qu'après paiement de la taxe d'opposition (Art. 99(1) Convention sur le
brevet européen).

BUNDESDRUCKEREI BERLIN

## Description

La présente invention est relative aux dispositifs d'assistance de direction pour véhicule automobile et en particulier à ceux dans lesquels l'énergie motrice nécessaire à l'assistance est fournie par un moteur électrique.

Dans le FR-A-2 442 476, on décrit un dispositif d'assistance de direction de ce type. Dans ce cas, le moteur électrique est branché en série sur une source d'alimentation par l'intermédiaire d'un inverseur marche-arrêt autorisant les deux sens de marche du moteur et commandé par un capteur sensible au couple exercé sur le volant, ledit inverseur réagissant à une première valeur prédéterminée de ce couple, tandis que lorsque celui-ci atteint une seconde valeur prédéterminée supérieure à la première le moteur électrique est couplé à la colonne de direction pour fournir l'assistance.

Lorsqu'avec un tel dispositif d'assistance de direction, le rayon de braquage minimal est atteint, la direction est en fin de course droite ou gauche.

Si dans ce cas, le conducteur maintient l'effet exercé sur le volant, le moteur électrique est alimenté mais bloqué mécaniquement par l'intermédiaire de l'accouplement, de sorte qu'il chauffe exagérément et peut être détruit en quelques secondes.

Le risque est le même lorsqu'une roue, très proche d'un obstacle fixe et rigide, genre bordure de trottoir, est appuyé contre cet obstacle et ne peut le franchir.

Ce deuxième risque empêche d'envisager tout dispositif simple tel qu'un interrupteur de fin de course.

Or, on sait que lorsqu'un moteur électrique de préférence dans ce genre de dispositifs d'assistance de direction, est bloqué, sa force contre-électromotrice de rotation s'annule de sorte que seules une ou deux paires de sections de son bobinage (suivant la position d'arrêt) sont parcourues par le courant.

Vu la très faible résistance de la ou des sections de bobinage, une intensité très forte parcourt ces sections et les échauffe rapidement. Par exemple, un moteur d'assistance consommant 20 à 30 A au maximum en fonctionnement normal voit l'intensité monter à près de 100 A au blocage, et la température du fil de bobinage s'élever de 140°C en 9 secondes par rapport à la température ambiante.

En première analyse, les spécialistes de la technique des moteurs électriques auraient ainsi tendance à brancher dans le circuit du moteur une sécurité thermique. Si cette sécurité est un simple fusible, le dispositif d'assistance devient inutilisable dès la première surcharge du moteur et il est évident que la nécessité de remplacer le fusible chaque fois qu'apparaît une surcharge, ne correspond pas aux exigences de l'utilisation par le grand public. Une deuxième sécurité que l'on serait tenté de mettre en œuvre consisterait à employer un contact thermique ouvrant le circuit du moteur par effet Joule du courant de surcharge. Un tel contact thermique n'est également pas envisageable, car on sait qu'après s'être ouvert par échauffement, un tel contact doit se refroidir pur se refermer. Or, avec les intensités du courant pouvant circuler dans le moteur électrique du dispositif d'assistance de direction en cas de surcharge, il faudrait plusieurs minutes pour que le contact se rétablisse encore que cette période ne serait pas de même durée à chaque fonctionnement du contact du fait du refroidissement aléatoire. En d'autres termes, l'utilisateur serait privé de l'assistance de direction pendant une période relativement prolongée à chaque surcharge, ce qui n'est évidemment pas admissible.

A cet inconvénient s'en ajouterait un autre qui consiste en ce que lorsque par suite d'une surcharge, le moteur électrique n'est plus alimenté, le volant subit une réaction en retour de la colonne de direction sollicité surtout par les pneumatiques du véhicule. Cette réaction peut être désagréable voir dangereuse.

L'invention a donc pour but de fournir un dispositif d'assistance de direction ne présentant aucun risque de détérioration du moteur électrique, étant prêt à fonctionner immédiatement après suppression de la surcharge et ne provoquant sur le volant aucune réaction en retour dans ce cas.

L'invention a donc pour objet et dispositif d'assistance de direction comportant un accouplement mécanique destiné à être interposé entre la colonne de direction et le volant, un détecteur du couple exercé sur le volant, un moteur électrique d'assistance qui peut être branché en série sur une source d'alimentation par l'intermédiaire d'un inverseur marche-arrêt autorisant sélectivement les deux sens de marche du moteur, ledit inverseur étant commandé par ledit détecteur lorsque ledit couple dépasse une première valeur prédéterminée et ledit accouplement provoquant le couplage du moteur à la colonne de direction lorsque ledit couple excède une seconde valeur prédéterminée, ce dispositif étant caractérisé en ce qu'il comprend en outre un organe commandé d'interruption de courant qui est monté en parallèle sur une résistance dans le circuit dudit moteur, qui est connecté pour présenter un retard à l'ouverture et une fermeture immédiate et qui est commandé par un détecteur du courant circulant dans le circuit du moteur.

Du fait des propriétés particulières de l'organe de commande d'interruption de courant, aucun retard ne peut intervenir après suppression d'une surcharge sur le moteur, tandis que par ailleurs, toute réduction intempestive du couple du moteur au démarrage est évitée par le retard apporté à l'ouverture de l'organe interrupteur, ce retard étant calculé de manière à dépasser la durée du courant transitoire lors de la mise sous tension du moteur. Enfin, la résistance électrique en parallèle sur l'organe interrupteur évite que le moteur ne soit privé totalement de son alimentation après une surcharge et peut fournir ainsi un couple compensateur de la réaction sur le volant, couple dont la valeur est choisie nettement inférieure à la valeur nominale.

Suivant une autre caractéristique de l'invention, ledit organe interrupteur commandé est le contact de repos d'un relais dont la bobine est alimentée par un circuit électronique à retard déclenché par ledit détecteur de courant.

Suivant une autre caractéristique de l'invention, ledit détecteur de courant comprend un enroulement de quelques spires parcouru par le courant du moteur et traversé par un circuit magnétique qui est associé à un capteur de Hall fournissant un signal représentant l'intensité du courant circulant dans le moteur.

L'invention est exposée ci-après plus en détail à l'aide de dessins représentant seulement un mode d'éxécution, sur lesquels:

la Fig. 1 représente un schéma de la partie électrique d'un dispositif d'assistance de direction pour véhicule automobile suivant l'invention;

la Fig. 2 est une vue en perspective d'un détecteur d'intensité de courant utilisé dans le dispositf représenté sur la Fig. 1.

Les figures ne représentent que les parties essentielles pour la compréhension de l'invention et on a notamment omis de représenter la partie mécanique du dispositif d'assistance de direction, mais on peut se reporter au FR. 2 442 476 pour une description complète d'un exemple de réalisation d'un mécanisme utilisable avec les caractéristiques de l'invention.

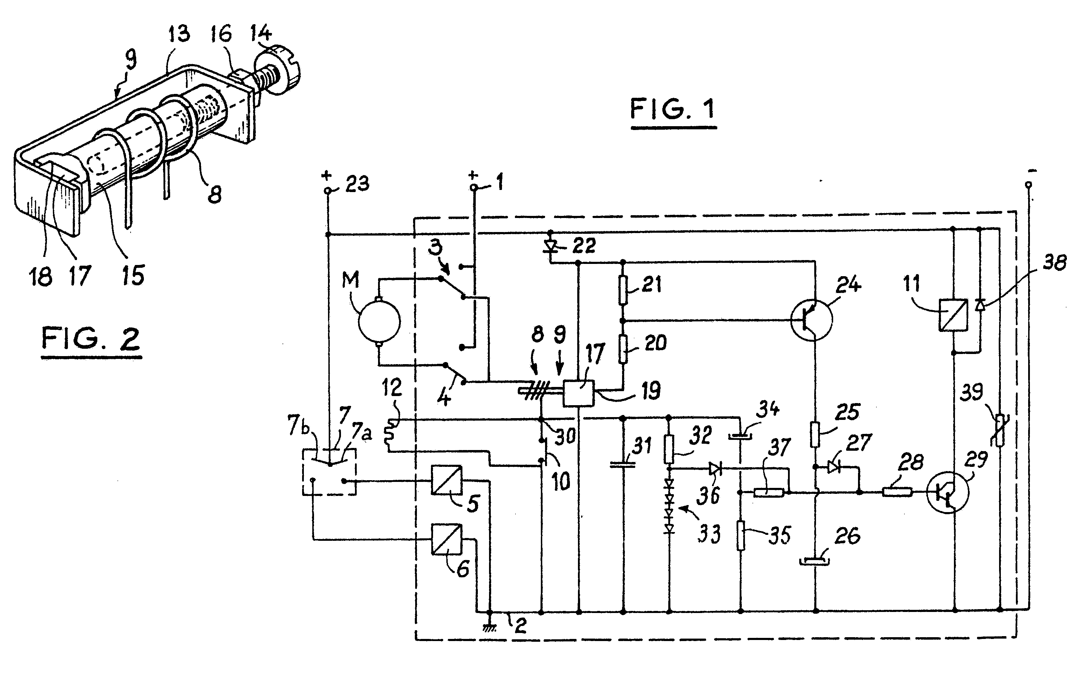

La Fig. 1 représente donc un mode de réalisation préféré de l'invention et on voit que le dispositif d'assistance comporte un moteur M pouvant être embrayé sur la colonne de direction (non représentée) par un mécanisme réagissant en fonction du couple qui est appliqué au volant (également non représenté) à partir d'une certaine valeur de ce couple.

Le moteur est connecté dans un circuit série raccordé entre la borne positive 1 de la batterie du véhicule et une ligne de masse 2 par l'intermédiaire de deux inverseurs 3 et 4 qui peuvent sélectivement appliquer la tension d'alimentation aux bornes du moteur M, l'inverseur 3 étant, par exemple, affecté à la marche du moteur lorsque le volant est tourné vers la droite et l'inverseur 4 correspondant au cas contraire. Les inverseurs 3 et 4 sont respectivement commandés par des bobines de relais 5 et 6 pouvant être mis en circuit par un double interrupteur 7 qui est monté entre le volant générateur du couple manuel, c'est-à-dire la colonne de direction et la partie mécanique chargée d'ajouter un couple additif par le moteur M, et dont chacun des interrupteurs élémentaires 7a et 7b, affectés respectivement au sens droite et gauche du volant sont fermés lorsque le vouple exercé sur le volant dépasse une première valeur prédéterminée. Il est à noter que lorsque ce couple dépasse une seconde valeur prédéterminée supérieure à la première, le moteur est embrayée sur la colonne de direction pour assurer l'assistance de direction, de telle sorte que dès que le volant est actionné, le moteur M est tout d'abord mis en marche avant qu'il puisse être embrayé sur la colonne de direction.

Le circuit série du moteur M comprend en outre un enroulement 8 d'un détecteur de courant 9 (voir également la Fig. 2) ainsi qu'un contact de repos 10 d'un relais de commande dont la bobine 11 sera décrite par la suite. Le contact de repos 10 est raccordé en parallèle à une résistance chutrice 12 qui est donc mise dans le circuit du moteur lorsque le contact 10 est ouvert.

En se reportant maintenant à la Fig. 2, on voit que le détecteur 9 comporte un circuit magnétique à réluctance réglable ayant un étrier 13 en un matériau magnétique dont l'une des ailes est traversée par une vis 14 également en un matériau magnétique, la partie de cette vis pénétrant à l'intérieur de l'étrier 13 étant entourée par un manchon 15 en un matériau isolant sur lequel est enroulé l'enroulement 8 du détecteur.

La vis 14 constitue un noyau magnétique réglable qui peut être bloquée à l'aide d'un écrou 16 et qui est associée à un capteur de Hall 17 maintenu contre la face intérieure de l'une des ailes de l'étrier 13 au moyen du manchon 15 qui à cet effet comporte à son extrémité libre un logement 18 de forme appropriée.

On sait qu'un capteur de Hall est un élément sensible au champ magnétique capable de fournir sur sa sortie un signal pouvant prendre deux états l'un correspondant à la présence d'un champ magnétique dans son environnement et l'autre à l'absence de champ magnétique.

En se reportant de nouveau à la Fig. 1, on voit que le capteur de Hall 17 présente une sortie 19 qui est raccordée à deux résistances en série 20 et 21 reliées par l'intermédiaire d'une diode 22 branchée dans le sens du blocage à une borne d'alimentation 23 qui est destinée à être raccordée à la borne positive de la clé de contact du véhicule. Cette borne 23 alimente également les bobines des relais 5 et 6 par l'intermédiaire de l'interrupteur double 7.

Le point de jonction des résistances 20 et 21 est relié à la base d'un transistor 24 dont l'émetteur est relié à la jonction entre la résistance 21 et la diode 22 et dont le collecteur est connecté à la ligne de masse 2 par l'intermédiaire d'une résistance 25 et d'un condensateur 26. La jonction entre ces deux derniers composants est branchée à l'anode d'une diode 27 dont la cathode est raccordée à l'anode d'une diode 27 dont la cathode est raccordée par une résistance 28 à la base d'un transistor 29 du type Darlington dont le circuit de sortie est connecté dans le circuit de la bobine 11 entre la borne 23 et la ligne de masse 2.

Le circuit que l'on vient de décrire constitue un montage à retard qui associe au contact de repos 10 une fonction de retard à l'ouverture par l'intermédiaire de la bobine de relais 11, fonctionnement qui sera décrit plus en détail ci-après.

Le point de jonction 30 entre l'enroulement 8 du détecteur de courant 9 et le contact de repos 10, est relié à trois circuits en parallèle dont le premier comporte un condensateur 31 relié par ailleurs à la masse, dont le second est composé d'une résistance 32 et de quatre diodes en série 33 reliées par ailleurs à la ligne de masse 2 et dont le troisième comporte un condensateur 34 et une résistance 35 en série, cette dernière étant également connectée à la ligne de masse 2.

Le point de jonction entre la résistance 32 et les diodes 33 est raccordé à une diode 36 dont la cathode est branchée sur le point de jonction entre la résistance 28 et une autre résistance 37 elle-même connectée au point de jonction entre le condensateur 34 et la résistance 35.

Le fonctionnement du dispositif d'assistance de direction suivant l'invention est le suivant.

Lorsque le détecteur de couple du mécanisme d'assistance de direction détecte, par suite d'une action sur le volant dans un sens ou dans l'autre, un couple dépassant une valeur prédéterminée, l'interrupteur double 7 ferme l'un ou l'autre de ces contacts 7a ou 7b, ce qui excite l'une ou l'autre des bobines 5 et 6 et ferme le contact inverseur 3 ou 4 correspondant. Le moteur M est donc mis en marche dans le sens approprié et lorsque le couple exercé sur le volant dépasse une valeur prédéterminée supérieure à la première valeur, le moteur est également embraye sur la colonne de direction conformément au fonctionnement qui est décrit dans le brevet précité.

Lorsque la direction du véhicule atteint le rayon de braquage minimal, elle peut se trouver sur les butées de fin de course droite ou gauche et le moteur M est alors bloqué tout en restant alimenté. Sa température augmente donc rapidement. Il en est de même lorsqu'une roue du véhicule très proche d'un obstacle tel que le trottoir par exemple est appuyée contre cet obstacle et ne peut le franchir quel que soit le couple exercé sur le volant.

Le circuit électrique représenté à la Fig. 1 évite que dans ces deux cas, le moteur soit détruit par échauffement excessif.

Lorsque le moteur M fonctionne normalement, le courant qui parcourt l'enroulement 8 reste inférieur à un seuil que l'on a réglé à la construction à l'aide de la vis 14 (Fig. 2). En effet, cette vis 14 permet de canaliser le flux engendré par l'enroulement 8 lorsqu'il est parcouru par un courant et de concentrer ce flux sur le capteur de Hall, ce dernier étant d'autant plus influencé que l'entrefer entre la pointe de la vis 14 et le capteur est plus petit.

Dans ces conditions normales de fonctionnement, le contact 10 est fermé, la bobine 11 n'est pas excitée et le transistor 29 n'est pas conducteur étant donné que sa base se trouve à un potentiel qui est celui du point de jonction 30 qui est relié à la masse par le contact 10. Le transistor 29 est maintenu bloqué grâce au fait que dans ces conditions, le capteur de Hall 17 est à l'état haut, si bien qu'aucun courant ne circule dans les résistances 20 et 21, maintenant ainsi le transistor 24 bloqué et le condensateur 26 déchargé.

Si maintenant le moteur se trouve bloqué par suite de l'une ou l'autre des causes énoncées ci-dessus, le courant qui circule dans ce moteur prend une intensité rapidement supérieure au seuil fixé dans le détecteur de courant 9, ce qui fait que la sortie du capteur de Hall 17 passe à l'état bas. Il en résulte la circulation d'un courant à travers le diviseur de tension formé par les résistances 20 et 21, si bien que le transistor 24 est rendu conducteur et le condensateur 26 peut alors se charger par l'intermédiaire de la résistance 25. Lorsque le potentiel sur la base du transistor 29 est suffisant par suite de la charge de ce condensateur, ce transistor devient conducteur et excite la bobine 11, ce qui ouvre le contact 10. On s'aperçoit donc que ce contact ne s'ouvre qu'à partir de l'écoulement d'un certain délai qui est fixé par le circuit RC formé par la résistance 25 et le condensateur 26. Le retard apporté ainsi à l'ouverture du contact de repos 10 est dans tous les cas choisi supérieur à la durée des phénomènes transitoires survenant dans le moteur lorsque celui-ci est mis en marche.

Le contact 10 étant ainsi ouvert, la résistance chutrice 12 est branchée dans le circuit du moteur de sorte que l'intensité du courant qui le parcourt diminue jusqu'à une valeur acceptable qui, pour fixer les idées, peut être de 13 A par exemple, alors que le courant nominal du moteur même peut être choisi à 10 A. Le point de jonction 30 prend donc un potentiel qui dépend de la valeur de la résistance 12 et, naturellement, de la tension d'alimentation de la borne 1.

Il en résulte la charge du condensateur 34 par l'intermédiaire de la résistance 35 jusqu'à ce que le potentiel du point de jonction 30 soit atteint. A cet instant, le potentiel à la base du transistor 29 est fixé par la diode 36 à une valeur qui est quatre fois supérieure à la tension directe de l'une des diodes 33 qui, comme on peut le voir, sont toutes montées en série. Il en résulte que le transistor 29 reste conducteur, car sa base est polarisée plus positivement que son émetteur, par l'intermédiaire de la diode 36, bien que la sortie 19 du capteur de Hall 17 soit repassée à l'état haut (l'intensité du courant dans le moteur a diminué provoquant le blocage du transistor 24).

Si pour une raison quelconque, le courant dans le circuit du moteur M et de la résistance 12 vient à diminuer, le condensateur 31 transforme cette baisse de courant en baisse de potentiel à la base du transistor 29 par l'intermédiaire des résistances 37 et 28, ce qui envoie sur cette base une impulsion négative qui provoque le blocage du transistor. La bobine 11 n'est alors plus excitée et le contact 10 se referme immédiatement, de sorte que le moteur est à nouveau alimenté à pleine puissance.

Bien entendu, si le courant dans le moteur M est annulé brutalement, par arrêt de l'action sur le volant (interrupteurs 7a ou 7b ouverts), le transistor 29 est bloqué instantanément, l'ensemble du circuit se trouvant alors à l'état de veille correspondant à la marche normale du moteur M.

La diode 22 a été prévue pour éviter la destruction du circuit en cas d'une erreur de branchement sur la batterie du véhicule. Les diodes 27 et 36 ont un rôle de blocage évitant que le courant ne puisse passer de la base du transistor 29 vers le point de jonction 30.

Enfin, une diode 38 est montée en parallèle sur la bobine 11 du relais commandant le contact 10, tandis qu'un varistor 39 (résistance à l'oxyde de zinc dont la valeur dépend de la tension à ses bornes) est branché entre la borne 23 et la masse. Ces deux composants sont destinés à protéger le circuit contre les transitoires.

**Revendications**

1. Dispositif d'assistance de direction comportant un accouplement mécanique destiné à être interposé entre la colonne de direction et le volant, un détecteur du couple exercé sur le volant, et un moteur électrique d'assistance (M) qui peut être branché en série sur une source d'alimentation par l'intermédiaire d'un inverseur marche-arrêt (3, 4, 7) autorisant sélectivement les deux sens de marche du moteur, ledit inverseur étant commandé par ledit détecteur lorsque ledit couple dépasse une première valeur prédéterminée et ledit accouplement provoquant le couplage du moteur (M) à la colonne de direction lorsque ledit couple excède une seconde valeur prédéterminée, ce dispositif étant caractérisé en ce qu'il comprend en outre un organe commandé d'interruption de courant (10) qui est monté en parallèle sur une résistance (12) dans le circuit dudit moteur (M), qui est connecté pour présenter un retard à l'ouverture et une fermeture immédiate et qui est commandé par un détecteur (9) du courant circulant dans le circuit du moteur (M).

2. Dispositif suivant la revendication , caractérisé en ce que ledit organe interrupteur commandé (10) est le contact de repos d'un relais dont la bobine (11) est alimentée par un circuit électronique à retard (24, 25, 26, 29) déclenché par ledit détecteur de courant (9).

3. Dispositif suivant la revendication 2, caractérisé en ce que ledit détecteur de courant (9) comprend un enroulement (8) de quelques spires parcouru par le courant du moteur (M) et traversé par un circuit magnétique (14) de préférence à réluctance réglable qui est associé à un capteur de Hall (17) fournissant un signal représentant l'intensité du courant circulant dans le moteur (M).

4. Dispositif suivant la revendications 2 et 3, caractérisé en ce que ledit circuit électronique à retard comporte un premier transistor (24) dont la base est raccordé à la sortie du capteur de Hall et dont le circuit collecteur-émetteur alimente un circuit RC (25, 26) destiné à déclencher un second transistor (29) alimentant la bobine (11) de relais commandant l'organe interrupteur (10).

5. Dispositif suivant la revendication 4, caractérisé en ce que la base du second transistor (29) est raccordée à un circuit de détection (30, 32, 33) du potentiel établi aux bornes de ladite résistance (12).

6. Dispositif suivant la revendication 5, caractérisé en ce que ledit circuit de détection (30, 32, 33) de la tension établie aux bornes de ladite résistance (12) est connecté à un circuit RC (34, 35) provoquant le blocage du second transistor (29) dès apparition d'une baisse d'intensité dans ladite résistance (12).

**Patentansprüche**

1. Servolenkungseinrichtung mit

— einer zur Anordnung zwischen der Lenksäule und dem Lenkrad vorgesehenen mechanischen Kupplung
— einem Detektor zum Erfassen des auf das Lenkrad ausgeübten Moments und
— einem elektrischen Servomotor (M), der in Serie mit einem Umkehr-Aus-Schalter (3, 4, 7) an eine Speisequelle geschaltet ist, wobei der Umkehr-Aus-Schalter selektiv die beiden Drehrichtungen des Motors schaltet und durch den Detektor gesteuert wird, wenn das Moment einen ersten vorbestimmten Wert überschreitet und durch das Moment, das das Kuppeln des Motors (M) an die Lenksäule bewirkt, wenn das Moment einen zweiten vorbestimmten Wert überschreitet,

gekennzeichnet durch

— ein Unterbrecher-Schaltglied (10), das parallel zu einem Widerstand (12) in den Motorkeis geschaltet ist, das zur Erzeugung einer Verzögerung des Öffnens und zum sofortigen Schließen des Schalters vorgesehen ist und das durch einen Stromdetektor (9) für den im Motorkreis fließenden Strom gesteuert wird.

2. Einrichtung nach Anspruch 1, dadurch gekennzeichnet, daß das gesteuerte Schaltglied (10) der Ruhekontakt einen Relais ist, dessen Spule (11) über eine elektronische Verzögerungsschaltung (24, 25, 26, 29) gespeist wird, die durch den Stromdetektor (9) aktiviert wird.

3. Einrichtung nach Anspruch 2, dadurch gekennzeichnet, daß der Stromdetektor (9) eine Spule (8) mit einigen Wicklungen aufweist, die vom Motorstrom durchflossen werden und die von einer magnetischen Schaltung (14), vorzugsweise mit einstellbarem magnetischen Widerstand durchquert werden, die einem Hall-Fühlglied (17) zugeordnet ist, das ein die Stromstärke des im Motor (M) fließenden Stroms wiedergebendes Signal liefert.

4. Einrichtung nach Anspruch 2 und 3, dadurch gekennzeichnet, daß die elektronische Verzögerungsschaltung einen ersten Transistor (24) aufweist, dessen Basis an den Ausgang des Hall-Fühlglieds geschaltet ist und dessen Emitter-Kollektor-Strecke ein RC-Glied (25, 26) speist, das einen zweiten Transistor (29) aktiviert, der die den Schalter (10) steuernde Relaisspule (11) speist.

5. Einrichtung nach Anspruch 4, dadurch gekennzeichnet, daß die Basis des zweiten Transistors (29) an eine Schaltung (30, 32, 33) zum Messen der Spannung an den Klemmen des Widerstands (12) angeschlossen ist.

6. Einrichtung nach Anspruch 5, dadurch gekennzeichnet, daß die Schaltung (30, 32, 33) zum Messen der Spannung an den Klemmen des Widerstands (12) an ein RC-Glied (34, 35) geschaltet ist, das von dem Auftreten eines Stromabfalls im Widerstand (12) an den zweiten Transistor (29) sperrt.

**Claims**

1. A steering assisting device comprising a mechanical coupling adapted to be interposed between the steering column and the steering wheel, a detector of the torque applied to the steering wheel, and an assisting electric motor (M) which can be connected in series to a supply through an on-off reversing switch (3, 4, 7) allowing selectively the two directions of operation of the motor, said reversing switch being controlled by said detector when said torque exceeds a first predetermined value and said coupling causing the coupling of the motor (M) to the steering column when said torque exceeds a second predetermined value, said device being characterised in that it further comprises circuit-breaking controlled means (10) which is connected in parallel to a resistor (12) in the circuit of said motor (M), which is connected in such manner as to produce a delayed opening and an immediate closure and which is controlled by a detector (9) of the current in the circuit of the motor (M).

2. A device according to claim 1, characterised in that said circuit-breaking means (10) is the contact of rest of a relay whose coil (11) is supplied with current by an electronic delay circuit (24, 25, 26, 29) triggered by said current detector (9).

3. A device according to claim 2, characterised in that said current detector (9) comprises a winding (8) of a few turns carrying the current of the motor (M) and traversed by a magnetic circuit (14) which preferably has an adjustable reluctance and is associated with a Hall sensor (17) delivering a signal representing the intensity of the current in the motor (M).

4. A device according to claims 2 and 3, characterised in that said electronic delay circuit comprises a first transistor (24) whose base is connected to the output of the Hall sensor and whose collector-emitter circuit supplies current to an RC circuit (25, 26) adapted to trigger a second transistor (29) supplying current to the relay coil (11) controlling the circuit-breaking means (10).

5. A device according to claim 4, characterised in that the base of the second transistor (29) is connected to a circuit (30, 32, 33) for detecting the potential at the terminals of said resistor (12).

6. A device according to claim 5, characterised in that said circuit (30, 32, 33) for detecting the voltage across the terminals of said resistor (12) is connected to an RC circuit (34, 35) which turns off the second transistor (29) as soon as a drop in the current occurs in said resistor (12).

FIG. 2

FIG. 1

0 077 696